# EUROPÄISCHE PATENTANMELDUNG

(11) **EP 0 798 179 A1**
(43) Veröffentlichungstag der Anmeldung: **01.10.1997**
(21) Anmeldenummer: 97104215.5
(22) Anmeldetag: 13.03.1997
(51) Int. Cl.: B60R 22/44

(54) **Gurtaufroller für ein Fahrzeug-Sicherheitsgurtsystem**

(30) Priorität: 28.03.1996 DE 29605803 U
(71) Anmelder: TRW Occupant Restraint Systems GmbH, 73551 Alfdorf (DE)
(72) Erfinder: Frei, Bernhard, 73550 Waldstetten (DE); Hirzel, Uwe, 71549 Auenwald (DE)
(74) Vertreter: Degwert, Hartmut, Dipl.-Phys.

(57) **Zusammenfassung**

Bei einem Gurtaufroller für Sicherheitsgurte in Fahrzeugen, mit einer in einem Gehäuse drehbar gelagerten Gurtspule (12) und einer Triebfeder (15), die ein die Gurtspule in der Aufwickelrichtung beaufschlagendes Drehmoment erzeugt, soll der Verlauf von Gurtbandabzugskraft über abgezogenem Gurtband in nahezu beliebiger Weise eingestellt werden können. Zu diesem Zweck ist der erfindungsgemäße Gurtaufroller dadurch gekennzeichnet, daß die Gurtspule (12) triebschlüssig über ein Zahnradgetriebe mit einer Zahnstange (34) gekoppelt ist, die durch Drehung der Gurtspule (12) eine Bewegung auf einer durch eine Führung erzwungenen Bahn ausführt, und daß an der Zahnstange ein Energiespeicher (24) mit einer Wirkrichtung angreift, die durch die Bewegung der Zahnstange (34) auf der erzwungenen Bahn verändert wird. Bei einem solchen Gurtaufroller kann durch eine geeignete Wahl des Energiespeichers, der Bewegungsbahn der Zahnstange und der sich daraus ergebenden Wirkrichtung des Energiespeichers auf die Zahnstange ein nahezu beliebiger Verlauf von Gurtbandabzugskraft über abgezogenem Gurtband eingestellt werden kann.

## Beschreibung

Die Erfindung betrifft einen Gurtaufroller für Sicherheitsgurte in Fahrzeugen, mit einer in einem Gehäuse drehbar gelagerten Gurtspule und einer Triebfeder, die ein die Gurtspule in der Aufwickelrichtung beaufschlagendes Drehmoment erzeugt.

Bei einem solchen Gurtaufroller wird als Triebfeder üblicherweise eine spiralförmige Blattfeder verwendet, die mit ihrem einen Ende an einem Gehäuse des Gurtaufrollers und mit ihrem anderen Ende an der Gurtspule festgelegt ist und die Gurtspule in der Aufwickelrichtung beaufschlagt. Beim Abzug des Gurtbandes von der Gurtspule wird die Triebfeder immer stärker gespannt, so daß gemäß den allgemein bekannten Federgesetzen von der Triebfeder ein immer höheres Drehmoment bereitgestellt wird. Da sich ferner der Angriffsradius des Gurtbandes an der Gurtspule beim Abzug des Gurtbandes immer stärker vermindert, ergibt sich durch das Zusammenwirken dieser beiden Faktoren bei zunehmendem Gurtbandabzug ein allgemein als störend empfundener Anstieg der Gurtbandabzugskraft. Daher wurden im Stand der Technik verschiedene Lösungen vorgeschlagen, um dem Anstieg der Gurtbandabzugskraft bei fortschreitendem Gurtbandabzug entgegenzuwirken. Bekannt sind beispielsweise sogenannte Komfort-Aufroller, bei denen eine schwächer dimensionierte Hilfstriebfeder funktionell mit der Triebfeder in Reihe geschaltet ist, wobei die beiden Federn durch eine drehbare, selektiv sperrbare Scheibe miteinander gekoppelt sind. Ein solcher Komfort-Aufroller ist zwischen einem Zustand mit wirksamer Triebfeder und einem Zustand umschaltbar, bei dem nur die schwächer dimensionierte Hilfstriebfeder wirksam ist. In der nicht vorveröffentlichten Deutschen Patentanmeldung Nr. 195 01 076.0 ist ein Federantrieb für einen Gurtaufroller beschrieben, bei dem durch eine Zwangssteuerung der wirksame Angriffsradius der Triebfeder an der Gurtspule verändert wird, wodurch der Verlauf der Gurtbandabzugskraft über abgezogenem Gurtband verändert werden kann. Nachteilig bei allen Lösungen des Standes der Technik ist, daß der Verlauf von Gurtbandabzugskraft über abgezogenem Gurtband nur in eingeschränktem Maße in der gewünschten Weise eingestellt werden kann.

Es ist Aufgabe der Erfindung, einen Gurtaufroller der eingangs genannten Art dahingehend weiterzubilden, daß die Charakteristik von Gurtbandabzugskraft über abgezogenem Gurtband in nahezu beliebiger Weise eingestellt werden kann.

Zur Lösung dieser Aufgabe wird gemäß der Erfindung ein Gurtaufroller der eingangs genannten Art geschaffen, der dadurch gekennzeichnet ist, daß die Gurtspule triebschlüssig über ein Zahnradgetriebe mit einer Zahnstange gekoppelt ist, die durch Drehung der Gurtspule eine Bewegung auf einer durch eine Führung erzwungenen Bahn ausführt, und daß an der Zahnstange ein Energiespeicher mit einer Wirkrichtung angreift, die durch die Bewegung der Zahnstange auf der erzwungenen Bahn verändert wird. Bei einem solchen Gurtaufroller kann durch eine geeignete Wahl des Energiespeichers, der Bewegungsbahn der Zahnstange und der sich daraus ergebenden Wirkrichtung des Energiespeichers auf die Zahnstange ein auf die Gurtspule wirkendes Drehmoment erzeugt werden, das beispielsweise die Triebfeder unterstützt, der Triebfeder entgegenwirkt oder auch in einem ersten Betriebsbereich die Triebfeder unterstützt und in einem zweiten Betriebsbereich der Triebfeder entgegenwirkt, so daß durch die Erfindung ein nahezu beliebiger Verlauf von Gurtbandabzugskraft über abgezogenem Gurtband eingestellt werden kann.

Vorteilhafte Weiterbildungen der Erfindung sind in den Unteransprüchen ausgeführt.

Die Erfindung wird nachfolgend unter Bezugnahme auf bevorzugte Ausführungsformen beschrieben, die in der beigefügten Zeichnung dargestellt sind. In dieser zeigen:
- Figur 1 schematisch eine Draufsicht in axialer Richtung auf das mit dem Energiespeicher versehene Ende eines erfindungsgemäßen Gurtaufrollers gemäß einer ersten Ausführungsform;
- Figur 2 schematisch einen Querschnitt durch den Gurtaufroller von Figur 1;
- Figur 3 in einer Ansicht entsprechend derjenigen von Figur 1 einen erfindungsgemäßen Gurtaufroller gemäß einer zweiten Ausführungsform;
- Figur 4 in einer Ansicht entsprechend derjenigen von Figur 1 einen erfindungsgemäßen Gurtaufroller gemäß einer dritten Ausführungsform;
- Figur 5 eine Weiterbildung des Gurtaufrollers von Fig. 4;
- Figur 6 in einer Ansicht entsprechend derjenigen von Figur 1 einen erfindungsgemäßen Gurtaufroller gemäß einer vierten Ausführungsform;
- Figur 7 in einer Ansicht entsprechend derjenigen von Figur 1 einen erfindungsgemäßen Gurtaufroller gemäß einer fünften Ausführungsform;
- Figur 8 schematisch in einer perspektivischen Ansicht ein Detail einer vorteilhaften Weiterbildung eines erfindungsgemäßen Gurtaufrollers;
- Figur 9 in einer Ansicht entsprechend derjenigen von Figur 1 einen erfindungsgemäßen Gurtaufroller gemäß einer sechsten Ausführungsform; und
- Figur 10 in einer Ansicht entsprechend derjenigen von Figur 1 einen erfindungsgemäßen Gurtaufroller gemäß einer siebten Ausführungsform.

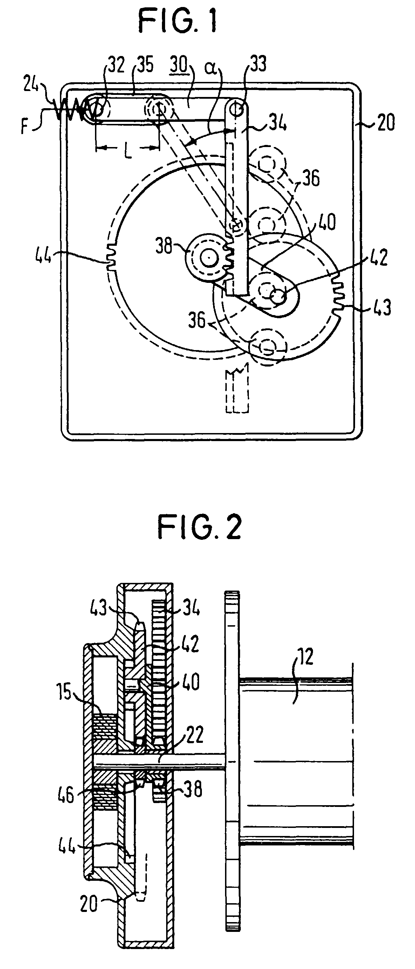

In den Figuren 1 und 2 ist schematisch eine erste Ausführungsform der Erfindung dargestellt. Der dargestellte Gurtaufroller enthält eine drehbar gelagerte Gurtspule 12 und eine Triebfeder 15, die ein erstes, die Gurtspule 12 in der Aufwickelrichtung beaufschlagendes Drehmoment erzeugt. Diese Triebfeder 15 ist mit einem (nicht dargestellten) ersten Ende an einem die Triebfeder umgebenden Gehäuse 20 festgelegt, und ihr (nicht dargestelltes) zweites Ende ist an der Achse 22 der Gurtspule 12 festgelegt.

Der Gurtaufroller ist mit einem Energiespeicher in der Form einer Feder 24 versehen, deren Angriffsstelle, Wirkungsrichtung und ausgeübte Kraft durch den Pfeil F angedeutet sind. Diese Feder kann eine Zugfeder oder eine Druckfeder sein, beispielsweise eine Blattfeder, die mit einem ersten Ende fest am Gehäuse 20 eingespannt ist und deren freies Ende die gewünschte Kraft bereitstellt. Das freie Ende der Feder beaufschlagt ein erstes Ende 32 eines starren Zwischenhebeis 30, das in einer Schiebeführung 35 verschiebbar in dem Gehäuse 20 gelagert ist. Das zweite Ende 33 des Zwischenhebeis 30 ist gelenkig mit einer Zahnstange 34 verbunden. Die Zahnstange 34 ist von Stützrollen 36 so geführt, daß sie sich zwischen der in Fig. 1 mit durchgezogenen Linien dargestellten oberen Stellung und der in Fig. 1 gestrichelt angedeuteten unteren Stellung verstellen kann. Die obere Stellung der Zahnstange entspricht dem Ausgangszustand des Gurtaufrollers mit vollständig aufgewickeltem Gurtband, und die untere Stellung entspricht einem Zustand mit vollständig abgezogenem Gurtband. Zur Verminderung von Reibungen bei der Verstellung der Zahnstange 34 und des Zwischenhebels 30 sind die Stützrollen 36 wälzgelagert, und das erste Ende 32 des Zwischenhebels ist in der Schiebeführung 35 mit einem Wälzlager geführt. Die Zahnstange 34 kämmt mit ihrer Verzahnung in einem Ritzel 38, das drehbar auf der Achse 22 angeordnet und drehfest mit einem Ende eines Hebels 40 verbunden ist, an dessen anderem Ende ein Planetenrad 42 drehbar gelagert ist. Dieses Planetenrad 42 kämmt mit einer kleinen ersten Verzahnung in einer Innenverzahnung 44, die in dem Gehäuse 20 ausgebildet ist, und mit einer großen zweiten Verzahnung 43 in einem Sonnenrad 46, das über die Achse 22 drehfest mit der Gurtspule 12 verbunden ist. Dieser Aufbau bildet ein Planetengetriebe, welches eine Drehung des fest mit der Gurtspule 12 verbundenen Sonnenrades 46 in eine Drehung des Ritzels 38 und somit eine Verstellung der Zahnstange 34 untersetzt.

Die Arbeitsweise eines solchen Gurtaufrollers ist die folgende: Wenn ausgehend von dem in Figur 1 dargestellten Ausgangszustand des Gurtaufrollers von der Gurtspule 12 Gurtband abgezogen wird, erzeugt die Drehung der Gurtspule über das Planetengetriebe eine solche Drehung des Ritzels 38, daß die Zahnstange 34 bezüglich der Figuren nach unten verstellt wird. Somit ändert sich der Winkel α zwischen der Verstellrichtung der Zahnstange 34 und der Längsrichtung des Zwischenhebels 30. Wenn dieser Winkel α = 90° beträgt, wie dies in der Ausgangsstellung des Gurtaufrollers der Fall ist, liegt die Längsrichtung des Zwischenhebels 30 senkrecht zur Verstellrichtung der Zahnstange 34, so daß auf die Zahnstange 34 keine in ihrer Bewegungsrichtung wirkende Kraftkomponente übertragen werden kann. Bei der Bewegung der Zahnstange 34 nach unten wird dieser Winkel α verringert, so daß ein Teil der Kraft F der Feder 24 über den Zwischenhebel auf die Zahnstange einwirkt, nämlich die Komponente F/tan α, die sich in Abhängigkeit von der Drehung der Gurtspule 12 ändert. Diese auf die Zahnstange 34 einwirkende Komponente der Kraft F erzeugt über das aus dem Sonnenrad 46, dem Planetenrad 42 und der Innenverzahnung 44 gebildeten Planetengetriebe ein zweites Drehmoment, das die Gurtspule 12 beaufschlagt und dem von der Triebfeder 15 erzeugten ersten Drehmoment entgegenwirkt. Die Abnahme des Winkels α bei einer Bewegung der Zahnstange 34 nach unten und die damit verbundene Zunahme der auf die Zahnstange 34 übertragenen Komponente der Kraft F ermöglicht, die Abnahme des Betrages der Kraft F, die durch die Verstellung des ersten Endes 32 des Zwischenhebels 30 in der Schiebeführung 35 nach rechts und die damit verbundene Entspannung der Feder hervorgerufen wird, je nach der Charakteristik der verwendeten Feder zu kompensieren oder gar zu überkompensieren.

Durch eine geeignete Wahl der Länge des Zwischenhebels 30, der Kraft F der Feder 24 und der Übersetzung des Planetengetriebes kann der Verlauf des von der Feder bereitgestellten und auf die Gurtspule 12 übertragenen zweiten Drehmomentes in einem weiten Bereich so eingestellt werden, daß dieses zweite Drehmoment überlagert mit dem ersten Drehmoment der Triebfeder 15 den gewünschten Verlauf von Gurtbandabzugskraft über abgezogenem Gurtband ergibt und daß insbesondere dem unerwünschten Anstieg der Gurtbandabzugskraft bei fortschreitendem Gurtbandabzug entgegengewirkt wird.

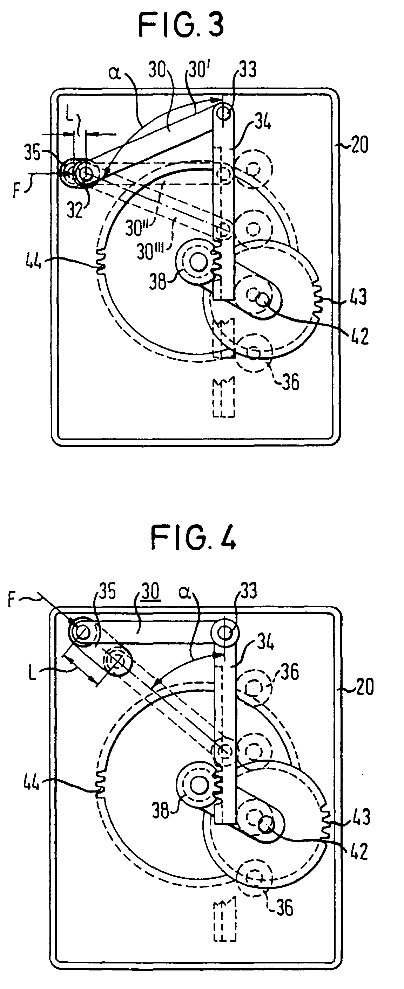

In Figur 3 ist eine zweite Ausführungsform des Gurtaufrollers dargestellt. Die Bauteile dieses Gurtaufrollers, die Bauteilen des Gurtaufrollers gemäß der ersten Ausführungsform entsprechen, sind mit den gleichen Bezugszeichen versehen. Der Aufbau dieses Gurtaufrollers entspricht weitgehend dem unter Bezugnahme auf die Figuren 1 und 2 erläuterten Gurtaufroller. Der wesentliche Unterschied zu dem oben dargestellten Gurtaufroller besteht darin, daß in der in Figur 3 mit durchgezogenen Linien dargestellten Ausgangsstellung 30' des Gurtaufrollers der Zwischenhebel 30 mit der Zahnstange 34 einen Winkel α von mehr als 90° einschließt. Dadurch erzeugt die Kraft F der Feder 24 ein zweites Drehmoment, welches das von der Triebfeder 15 erzeugte erste Drehmoment unterstützt in dem Arbeitsbereich der Triebfeder 15 unterstützt, in dem diese die geringste Aufwickelkraft bereitstellt. Durch eine Drehung der Gurtspule bei fortschreitendem Gurtbandabzug wird die Zahnstange 34 in eine in Fig. 3 gestrichelt dargestellte Stellung 30'' verstellt, in welcher der Winkel α zwischen der Zahnstange 34 und dem Zwischenhebel 30 genau 90° beträgt. In dieser Stellung weist das von der Feder erzeugte zweite Drehmoment einen Betrag von Null auf, da die Wirkungslinie des Zwischenhebels 30 senkrecht zur Verstellrichtung der Zahnstange 34 ist. Die Gurtspule wird bei dieser Stellung des Zwischenhebels 30 also nur von dem ersten Drehmoment beaufschlagt. Wird ausgehend von dieser Stellung die Zahnstange 34 weiter nach unten beispielsweise in die Stellung 30''' verstellt, erzeugt die Feder ein zweites Drehmoment, welches dem von der Triebfeder erzeugten ersten Drehmoment entgegenwirkt. Bei dieser Ausführungsform ist der Verstellweg L des ersten Endes 32 des Zwischenhebels 30 geringer als der Verstellweg L bei der ersten Ausführungsform, weshalb durch Entspannung/Kompression der Feder bedingte Schwankungen der Kraft F kleiner als bei der Ausführungsform nach den Figuren 1 und 2 ist.

In Figur 4 ist eine dritte Ausführungsform des Gurtaufrollers dargestellt. Dieser entspricht weitestgehend den unter Bezugnahme auf die vorangegangenen Figuren erläuterten Gurtaufrollern. Der wesentliche Unterschied gegenüber den beiden vorangegangenen Ausführungsformen besteht darin, daß das erste Ende 32 des Zwischenhebels 30 in einer solchen Richtung geführt ist, daß die Wirkrichtung der Feder 24 parallel zur Längsrichtung des Zwischenhebels 30 ist, wenn sich dieser in der zu der unteren Stellung der Zahnstange 34 gehörenden Stellung befindet. Durch die Wahl der Ausrichtung der Wirkrichtung der Feder 24 und der Verstellrichtung des ersten Endes 32 des Zwischenhebels 30 ergibt sich ein weiterer Parameter, mit dem der Verlauf von Gurtbandabzugskraft über abgezogenem Gurtband eingestellt werden kann.

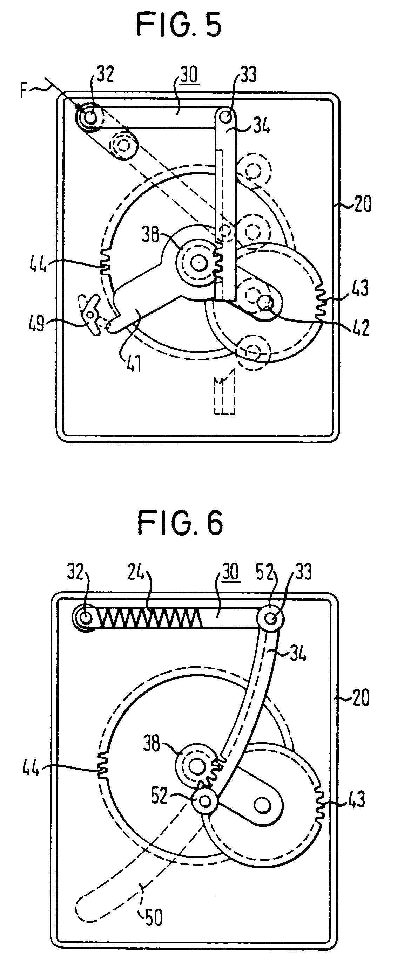

In Figur 5 ist eine Variante des unter Bezugnahme auf Figur 4 erläuterten Gurtaufrollers dargestellt, bei dem ein Fortsatz 41 des Hebels 40 dafür verwendet wird, bei der Rückkehr des Gurtaufrollers in die in dieser Figur mit durchgehenden Linien dargestellte Ausgangsstellung eine an sich bekannte Kindersicherung zu deaktivieren. Eine solche Kindersicherung ist zwischen einem aktiven Zustand, bei dem das Gurtband nur aufgewickelt, jedoch nicht weiter abgezogen werden kann, und einem inaktiven Zustand umschaltbar, in dem das Gurtband wieder frei abgezogen werden kann. Die Umschaltung von dem Zustand mit aktivierter Kindersicherung in den inaktiven Zustand mit frei abziehbarem Gurtband wird üblicherweise dadurch erzielt, daß das Gurtband vollständig auf die Gurtspule aufgewickelt wird. Bei dieser Ausführungsform legt der Fortsatz 41 bei der Rückkehr in die dargestellte Stellung einen Kipphebel 49 um, wodurch der Gurtaufrollers in den inaktiven Zustand umgeschaltet wird.

In Figur 6 ist eine vierte Ausführungsform des erfindungsgemäßen Gurtaufrollers dargestellt. Auch bei dieser Ausführungsform werden eine Zahnstange und ein Planetengetriebe dazu verwendet, die Gurtspule mit einem zweiten Drehmoment zu beaufschlagen. Die wesentlichen Unterschiede zu den vorangegangenen Ausführungsformen liegen darin, daß die Zahnstange 34 eine gekrümmte Form aufweist, daß sie in einer schematisch dargestellten Zahnstangen-Schiebeführung 50 geführt ist, daß das erste Ende 32 des Zwischenhebels 30 fest an dem Gehäuse 20 angelenkt ist und daß der Zwischenhebel 30 eine variable Länge aufweist. Die Zahnstangen-Schiebeführung 50 ist in dem der Gurtspule zugewandten Teil des Gehäuses 20 ausgebildet, und die Zahnstange 34 ist in dieser durch Wälzlager 52 geführt, die an den Enden der Zahnstange 34 angeordnet sind und in die Zahnstangen-Schiebeführung 50 eingreifen, wodurch eine reibungsarme Verstellung der Zahnstange 34 gewährleistet ist. An dem oberen Ende der Zahnstange 34 ist der Zwischenhebel 30 angelenkt, der nach Art eines Teleskophebels und mit hohlem Innenraum ausgeführt ist, in dem die Feder 24 angeordnet ist, die als Druckfeder ausgeführt ist und den Zwischenhebel 30 in Richtung einer Längenzunahme beaufschlagt. Auch bei dieser Ausführungsform wird die Zahnstange 34 durch eine von einem Abziehen des Gurtbandes hervorgerufene Drehung der Gurtspule bezüglich der Figur nach unten bewegt. Aufgrund der Ausrichtung der Zahnstangen-Schiebeführung 50 relativ zu dem ersten Ende 32 des Zwischenhebels 30 entfernt sich das zweite Ende 33 von dem ersten Ende 32, wenn die Zahnstange 34 nach unten bewegt wird. Auf diese Weise wird ähnlich wie bei der ersten Ausführungsform von der Feder ein zweites Drehmoment auf die Gurtspule ausgeübt. Da die Tangente an die Zahnstangen-Schiebeführung 50 in deren oberen Punkt, in dem sich das Wälzlager des oberen Endes der Zahnstange 34 in der Ausgangsstellung befindet, senkrecht zur Wirkrichtung der Feder ist, ist in der Ausgangsstellung das von der Feder auf die Gurtspule ausgeübte Drehmoment gleich Null, und es erhöht sich bei einer Bewegung der Zahnstange 34 nach unten, wobei das zweite Drehmoment dem von der Triebfeder erzeugten ersten Drehmoment entgegenwirkt.

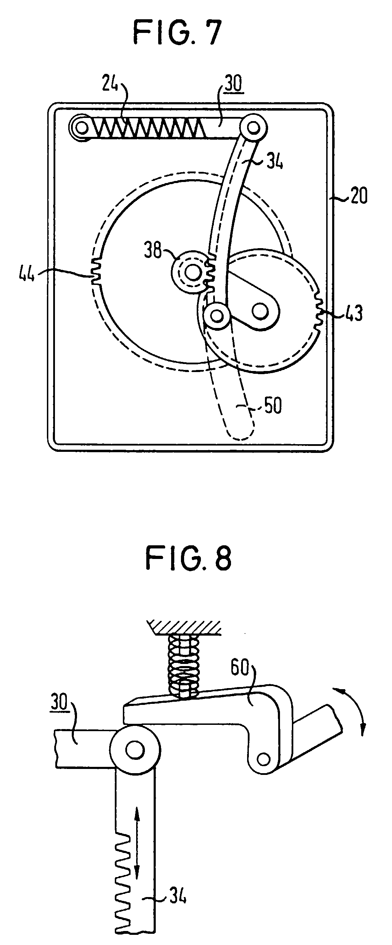

In Figur 7 ist eine fünfte Ausführungsform des Gurtaufrollers dargestellt, der weitestgehend dem Gurtaufroller gemäß der vierten Ausführungsform entspricht. Der einzige Unterschied liegt in der Form der Zahnstange 34, die in der entgegengesetzten Richtung wie die Zahnstange des Gurtaufrollers gemäß der vierten Ausführungsform gekrümmt ist. Durch diese Gestaltung ergibt sich ein zweites Drehmoment, das im Bereich mit fast vollständig aufgewickeltem Gurtband in der gleichen Richtung wie das erste Drehmoment wirkt und dieses unterstützt, dann bei fortschreitendem Gurtbandabzug zu Null wird und bei weiterem Gurtbandabzug dem ersten Drehmoment entgegenwirkt und somit eine Zunahme der Gurtbandabzugskraft begrenzt. Ein solcher Verlauf des zweiten Drehmomentes ist bereits von der zweiten Ausführungsform bekannt.

In Figur 8 ist dargestellt, wie bei allen dargestellten Ausführungsformen die Verstellung der Zahnstange 34 abgetastet und als Belegungsanzeige des dem Gurtaufroller zugeordneten Fahrzeugsitzes ausgewertet werden kann. Wenn der Fahrzeugsitz belegt ist und der Fahrzeuginsasse ordnungsgemäß seinen Sicherheitsgurt angelegt hat, ist aufgrund des Abzuges von Gurtband von der Gurtspule die Zahnstange 34 nach unten verstellt. Diese Verstellung wird von einem Abtasthebel 60 abgetastet und als Kriterium für die Entscheidung ausgewertet, ob der entsprechende Sitz belegt ist oder nicht. Eine solche Auswertung ist insbesondere für die Aktivierung eines dem entsprechenden Sitz zugeordneten Gassacks oder eines Gurtstraffers von Interesse.

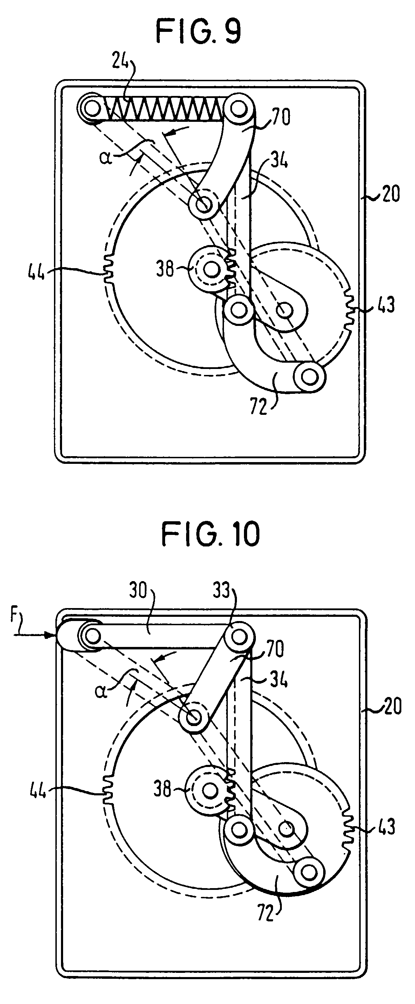

In Figur 9 ist eine sechste Ausführungsform eines erfindungsgemäßen Gurtaufrollers dargestellt, bei der die aus vorangegangenen Ausführungsformen bekannte Zahnstangen-Schiebeführung in zwei voneinander getrennte Teilschiebeführungen 70, 72 für das erste Ende und das zweite Ende der Zahnstange aufgeteilt ist. Auf diese Weise kann durch die Wahl des Verstellweges der Zahnstange bei fortschreitendem Gurtbandabzug und durch die sich dabei einstellende Ausrichtung der Zahnstange relativ zur Längsrichtung des Zwischenhebels nahezu jeder Verlauf des von der Feder erzeugten Drehmomentes eingestellt werden.

In Figur 10 ist eine siebte Ausführungsform eines erfindungsgemäßen Gurtaufrollers dargestellt, bei der es bei fortschreitendem Gurtbandabzug zu einer Kompression der Feder 24 kommt. Bei dieser Gestaltung ergibt sich durchgehend ein von der Feder 24 erzeugtes zweites Drehmoment, das die Wirkung des von der Triebfeder 15 erzeugten ersten Drehmoments unterstützt, so daß die Triebfeder schwächer dimensioniert werden kann als bei herkömmlichen Gurtaufrollem.

Bei einer nicht dargestellten Weiterbildung eines erfindungsgemäßen Gurtaufrollers, die insbesondere dann vorteilhaft ist, wenn der Gurtaufroller mit einer Gurtstraffvorrichtung versehen ist, ist vorgesehen, daß im Kraftfluß zwischen der Gurtspule 12 und dem Zahnradgetriebe eine Sollbruchstelle ausgebildet ist. Diese Sollbruchstelle führt bei einer Auslösung der Straffvorrichtung zu einer Trennung der Gurtspule von dem Zahnradgetriebe und damit von dem Energiespeicher, so daß der Straffvorgang nicht behindert wird.

## Patentansprüche

1. Gurtaufroller für Sicherheitsgurte in Fahrzeugen, mit einer in einem Gehäuse drehbar gelagerten Gurtspule (12) und einer Triebfeder (15), die ein die Gurtspule (12) in der Aufwickelrichtung beaufschlagendes Drehmoment erzeugt, dadurch gekennzeichnet, daß die Gurtspule (12) triebschlüssig über ein Zahnradgetriebe mit einer Zahnstange (34) gekoppelt ist, die durch Drehung der Gurtspule (12) eine Bewegung auf einer durch eine Führung (36; 50; 70, 72) erzwungenen Bahn ausführt, und daß an der Zahnstange (34) ein Energiespeicher (24) mit einer Wirkrichtung angreift, die durch die Bewegung der Zahnstange (34) auf der erzwungenen Bahn verändert wird.

2. Gurtaufroller nach Anspruch 1, dadurch gekennzeichnet, daß der Energiespeicher eine Feder (24) ist.

3. Gurtaufroller nach einem der vorhergehenden Ansprüche, dadurch gekennzeichnet, daß die Zahnstange (34) mit einem Zahnrad (38) des Zahnradgetriebes in Kämmeingriff steht, das um eine gehäusefeste Achse drehbar gelagert ist.

4. Gurtaufroller nach einem der vorhergehenden Ansprüche, dadurch gekennzeichnet, daß die Führung (36) eine lineare Translation der Zahnstange (34) erzwingt.

5. Gurtaufroller nach einem der Ansprüche 1 bis 3, dadurch gekennzeichnet, daß die Enden (32, 33) der Zahnstange (34) auf einer gekrümmten Steuerkurve (50) zwangsgeführt sind.

6. Gurtaufroller nach einem der Ansprüche 1 bis 3, dadurch gekennzeichnet, daß die Enden (32, 33) der Zahnstange (34) auf verschieden gekrümmten Steuerkurven (70, 72) zwangsgeführt sind.

7. Gurtaufroller nach einem der vorhergehenden Ansprüche, dadurch gekennzeichnet, daß der Energiespeicher (24) an der Zahnstange (34) über ein Gestängeelement (30) angreift.

8. Gurtaufroller nach einem der Ansprüche 1 bis 7, dadurch gekennzeichnet, daß die durch die Wirkrichtung des Energiespeichers (24) bestimmte Kraftkomponente auf die Zahnstange (34) über das Zahnradgetriebe ein Drehmoment an der Gurtspule (12) erzeugt, das ausgehend von einem Wert von Null in einem Ausgangszustand mit vollständig auf die Gurtspule (12) aufgewickeltem Gurtband bei zunehmendem Gurtbandabzug anwächst und dem von der Triebfeder (15) erzeugten Drehmoment entgegenwirkt.

9. Gurtaufroller nach einem der Ansprüche 1 bis 7, dadurch gekennzeichnet, daß die durch die Wirkrichtung des Energiespeichers (24) bestimmte Kraftkomponente auf die Zahnstange (34) über das Zahnradgetriebe ein Drehmoment an der Gurtspule (12) erzeugt, das bei einem Ausgangszustand mit vollständig auf die Gurtspule (12) aufgewickeltem Gurtband das von der Triebfeder (15) erzeugte Drehmoment unterstützt, dann bei fortschreitendem Gurtbandabzug zu Null wird und bei weiterem Gurtbandabzug dem von der Triebfeder (15) erzeugten Drehmoment entgegenwirkt.

10. Gurtaufroller nach einem der Ansprüch 1 bis 7, dadurch gekennzeichnet, daß die durch die Wirkrichtung des Energiespeichers (24) bestimmte Kraftkomponente auf die Zahnstange (34) über das Zahnradgetriebe ein Drehmoment an der Gurtspule (12) erzeugt, das ausgehend von einem Wert von Null in einem Ausgangszustand mit vollständig auf die Gurtspule (12) aufgewickeltem Gurtband bei zunehmendem Gurtbandabzug anwächst und das von der Triebfeder (15) erzeugte Drehmoment unterstützt.

11. Gurtaufroller nach einem der vorhergehenden Ansprüche, dadurch gekennzeichnet, daß in dem Kraftfluß zwischen der Gurtspule (12) und dem Zahnradgetriebe eine Sollbruchstelle ausgebildet ist.

12. Gurtaufroller nach einem der vorhergehenden Ansprüche, dadurch gekennzeichnet, daß das Zahnradgetriebe ein Planetengetriebe mit einem drehfest mit der Gurtspule verbundenen Sonnenrad (46), einer gehäusefesten Innenverzahnung (44) und mindestens einem zwischen der Innenverzahnung (44) und dem Sonnenrad (46) angeordneten Planetenrad (42) enthält.

13. Gurtaufroller nach den Ansprüchen 3 und 12, dadurch gekennzeichnet, daß das um eine gehäusefeste Achse drehbar gelagerte Zahnrad (38) drehfest mit einem Träger (40) verbunden ist, auf dem drehbar das Planetenrad (42) gelagert ist.

14. Gurtaufroller nach Anspruch 13, dadurch gekennzeichnet, daß an dem Träger (40) ein Schaltfortsatz (41) ausgebildet ist, der bei Drehung der Gurtspule (12) mit einem Schalthebel (50) zusammenwirkt.

15. Gurtaufroller nach einem der vorhergehenden Ansprüche, dadurch gekennzeichnet, daß ein Taster (60) die Verstellung der Zahnstange (34) abtastet.

16. Gurtaufroller nach einem der vorhergehenden Ansprüche, dadurch gekennzeichnet, daß die Triebfeder (15) und der Energiespeicher (24) mit dem Zahnradgetriebe und der Zahnstange (34) in einem gemeinsamen Gehäuse (22) angeordnet sind, das nach Art eines Moduls abnehmbar an dem Gurtaufroller befestigt ist.
